# EUROPÄISCHE PATENTSCHRIFT

(11) **EP 2 301 319 B1**
(45) Veröffentlichungstag und Bekanntmachung des Hinweises auf die Patenterteilung: **10.10.2012**
(21) Anmeldenummer: 10171545.6
(22) Anmeldetag: 02.08.2010
(51) Int. Cl.: A01D 43/073, A01D 43/08

(54) **Erntemaschine mit einer Vorrichtung zur Positionserfassung einer gegenüber einem Maschinengehäuse der Erntemaschine um eine Schwenkachse schwenkbaren Überladeeinrichtung**
Harvesting machine with a device for determining the position of an overload device which pivots around a pivoting axle relative to a housing of the harvesting machine
Moissonneuse avec un dispositif de détermination de la position d'un dispositif de surcharge pivotant autour d'un axe pivotant par rapport à un boîtier de machine de la moissonneuse

(30) Priorität: 23.09.2009 DE 102009042371
(43) Veröffentlichungstag der Anmeldung: 30.03.2011
(73) Patentinhaber: CLAAS Selbstfahrende Erntemaschinen GmbH, 33428 Harsewinkel (DE)
(72) Erfinder: Laumeier, Ludger, 33378 Rheda-Wiedenbrück (DE)

(56) Entgegenhaltungen:
- EP-A1- 1 151 652
- EP-A1- 1 287 731
- EP-A2- 1 393 613

## Beschreibung

Die Erfindung betrifft eine Erntemaschine mit einer Vorrichtung zur Positionserfassung einer gegenüber einem Maschinengehäuse einer Erntemaschine um eine Schwenkachse schwenkbaren Überladeeinrichtung, wobei ein Sensor mit einem mechanisch auslenkbaren Messglied am Maschinengehäuse angeordnet ist, und wobei der Überladeeinrichtung mechanische Führungsmittel zugeordnet sind, die das Messglied in Abhängigkeit vom Schwenkwinkel auslenken.

Selbstfahrende Erntemaschinen wie beispielsweise Feldhäcksler, Mähdrescher, Zuckerrohrerntemaschinen und dergleichen weisen üblicherweise eine Überladeeinrichtung auf, mit der das Erntegut von der Erntemaschine auf ein Transportfahrzeug übergeladen wird. Bei einer derartigen Überladeeinrichtung handelt es sich je nach Erntemaschine um einen sogenannten Aufwurfkrümmer, ein Korntankentleerungsrohr oder dergleichen. Wenn das geerntete Gut während der Erntefahrt kontinuierlich überladen werden soll, wie beispielsweise im Fall eines Feldhäckslers, fährt das Transportfahrzeug zweckmäßigerweise während der Erntefahrt parallel neben oder hinter der Erntemaschine her. Hierzu kann die Überladeeinrichtung durch Verschwenkung um eine in etwa vertikale Schwenkachse so positioniert werden, dass der ausgeworfene Erntegutstrom an einer gewünschten Stelle auf das Transportfahrzeug trifft.

Bei parallel neben der Erntemaschine mitfahrendem Transportfahrzeug ist es jeweils beim Wenden der Erntemaschine notwendig, die zu einer Seite der Erntemaschine ausgeschwenkte Überladeeinrichtung auf die gegenüberliegende Seite umzuschwenken, da das Transportfahrzeug nach dem Wenden auf der gegenüberliegenden Seite fährt. Bei hinter der Erntemaschine fahrendem Transportfahrzeug und bei Straßenfahrt wird die Überladeeinrichtung in eine nach hinten gerichtete Position gebracht.

Daneben wird die Verschwenkbarkeit der Überladeeinrichtung zur gleichmäßigen Befüllung des Transportfahrzeugs genutzt. So kann der Fahrer bei ausreichender Befüllung des Transportfahrzeugs an einer Stelle die Überladeeinrichtung so verschwenken, dass der Gutstrom auf eine andere Stelle innerhalb des Transportfahrzeugs trifft.

Die Verschwenkbarkeit der Überladeeinrichtung wird durch eine drehbare Lagerung der Überladeeinrichtung gegenüber dem Maschinengehäuse der Erntemaschine realisiert. Der Antrieb erfolgt beispielsweise mittels eines drehfest mit der Überladeeinrichtung verbundenen Drehkranzes, der durch einen am Maschinengehäuse angeordneten Schneckentrieb in Drehung versetzt wird.

Für die eingangs genannten Anwendungen ist es vorteilhaft, die Schwenkposition der Überladeeinrichtung genau erfassen zu können. Denn eine genaue Erfassung der Schwenkposition kann dem Fahrer die Bedienung der Überladeeinrichtung deutlich erleichtern, wenn die erfassten Positionsdaten dem Fahrer in geeigneter Weise angezeigt werden und/oder einer Steuereinrichtung zugeführt werden, die den Fahrer beispielsweise bei der automatischen Ansteuerung einer konkreten Schwenkposition unterstützt.

Daneben ist insbesondere bei Feldhäckslern eine Rundum-Verschwenkung der Überladeeinrichtung unmöglich, da in der Schwenkebene befindliche Gehäuseteile der Erntemaschine, wie beispielsweise die Fahrerkabine, den Schwenkbereich begrenzen. Aus Sicherheitsgründen besteht daher auch diesbezüglich Bedarf nach einer Positionserfassung der Überladeeinrichtung, um nämlich beim Schwenkvorgang eine Kollision der Überladeeinrichtung mit der Fahrerkabine zu vermeiden.

Aus der EP 1 393 613 A2 ist eine Erntemaschine mit einer Vorrichtung entsprechend dem Oberbegriff des Patentanspruchs 1 bekannt. Zur Positionsbestimmung der verschwenkbaren Überladeeinrichtung eines Feldhäckslers ist dort an der Überladeeinrichtung eine Kulisse angeordnet, die sich drehfest mit der Überladeeinrichtung um deren Schwenkachse dreht und die eine in axialer Richtung verlaufende Anlaufschräge aufweist. Im Bereich der Mittelachse des Feldhäckslers ist direkt hinter der Fahrerkabinenrückwand ein Sensor mit einer über einen Hebel angelenkten Tastrolle angeordnet, die als Messglied dient. Die Tastrolle rollt beim Schwenken der Überladeeinrichtung an der Oberkante der als mechanisches Führungsmittel dienenden mitdrehenden Kulisse ab. Wegen der an der Kulisse ausgebildeten Anlaufschräge führt das Abrollen der Tastrolle zu einer schwenkwinkelabhängigen Auslenkung des Messglieds in axialer Richtung. Da sich mit Auslenkung des Messglieds die Sensorstellung ändert, lässt sich auf diese Weise die Position der Überladeeinrichtung erfassen.

Nachteilig an der Erntemaschine aus EP 1 393 613 A2 ist deren Störanfälligkeit. Auf das Maschinengehäuse von oben fallende Partikel wie Erntegut, Laub oder dergleichen können sich leicht auf der Oberkante der Kulisse ablagern und so Messungenauigkeiten verursachen, da der Sensor auch eine durch Verunreinigungen bedingte Auslenkung der Tastrolle wie eine Schwenkbewegung wertet. Weiterhin ist deren Vorrichtung zur Positionserfassung aufgrund der Anordnung auf dem Maschinengehäuse Wettereinflüssen ausgesetzt, was die Abnutzung und damit Störanfälligkeit der Komponenten erhöht.

Es ist daher die Aufgabe der vorliegenden Erfindung, eine Erntemaschine der genannten Art anzugeben, deren Vorrichtung zur Positionserfassung bei verringerter Störanfälligkeit gegenüber Umwelteinflüssen eine genaue Positionserfassung der Überladeeinrichtung ermöglicht.

Die Aufgabe wird erfindungsgemäß dadurch gelöst, dass die mechanischen Führungsmittel das Messglied in Bezug auf die Schwenkachse in radialer Richtung auslenken.

Eine derartige radiale Auslenkung ist in konstruktiver Hinsicht günstig, da sich hierdurch die - bezogen auf die Schwenkachse - axiale Bauhöhe der Vorrichtung verringert. Vorhandener Bauraum lässt sich daher besser nutzen, so dass die Vorrichtung einschließlich des empfindlichen Sensors tiefer, insbesondere unterhalb der Gehäusewand, angeordnet werden kann, was die Störanfälligkeit aufgrund von Umwelteinflüssen verringert.

Grundsätzlich kann es sich bei den mechanischen Führungsmitteln um jedwede Anordnung mechanischer Wirkelemente handeln, die dazu geeignet ist, die Schwenkbewegung der Überladeeinrichtung in eine Auslenkung des Messglieds zu übertragen.

In vorteilhafter Weise umfassen die mechanischen Führungsmittel ein drehbares Stellelement, dessen Drehung an die Schwenkbewegung der Überladeeinrichtung gekoppelt ist, wobei an dem Stellelement eine umlaufende Führungsbahn ausgebildet ist, mit der das Messglied in Reibkontakt steht. Das drehbare Stellelement kann dabei auf ganz unterschiedliche Weise, beispielsweise als eigenes Maschinenelement, als Anbauteil oder integriert in ein bereits vorhandenes Maschinenteil, ausgeführt sein.

Die an dem Stellelement ausgebildete Führungsbahn läuft zumindest teilweise um das Stellelement um. Dies hat zur Folge, dass während der Schwenkbewegung, die aufgrund der kinematischen Kopplung auch das Stellelement in Drehung versetzt, das Messglied entlang der Führungsbahn geführt wird. Je nach Beschaffenheit der Führungsbahn wird das Messglied daher in Abhängigkeit von der Schwenkbewegung der Überladeeinrichtung mechanisch ausgelenkt. Dabei besteht zwischen Messglied und Führungsbahn Reibkontakt. Das Messglied kann also an der Führungsbahn rutschen oder rollen. Entsprechend geeignete Bauformen des Messglieds sind zweckmäßig.

In vorteilhafter Weise verläuft die am Stellelement ausgebildete Führungsbahn in einem mit zunehmendem Drehwinkel des Stellelements steigenden radialen Abstand zu dessen Drehachse, um eine winkelabhängige Auslenkung des Messglieds vorzugeben. Die Führungsbahn des Stellelements hat bevorzugt einen Verlauf, der es erlaubt, aus dem stellungsabhängigen radialen Abstand zur Drehachse eindeutig auf den Drehwinkel des Stellelements zu schließen. Dies lässt sich beispielsweise dadurch realisieren, dass die Führungsbahn einen bezogen auf die Drehachse des Stellelements spiralförmigen Verlauf aufweist. Bei einer bevorzugt linearen Steigung einer solchen Spiralform nimmt der radiale Abstand der Führungsbahn dann proportional mit dem Drehwinkel zu, was die Zuordnung von Auslenkung und Drehwinkel besonders einfach gestaltet. Vergleichbar mit einer auf einer Schallplatte laufenden Schallplattennadel stellt die Auslenkung des Messglieds damit ein Maß für den Drehwinkel des Stellelements dar. Aufgrund der kinematischen Kopplung von Stellelement und Überladeeinrichtung lässt sich so die Schwenkposition der Überladeeinrichtung anhand der definierten Auslenkung des Messglieds bestimmen.

Grundsätzlich kann die Führungsbahn verschiedenartig gestaltet sein. In einer einfachen Ausführung kann es sich beispielsweise um eine Außenkante des Stellelements handeln, an der das Messglied abrollt oder -rutscht. Konstruktiv besonders vorteilhaft ist es, die Führungsbahn als eine das Messglied zumindest teilweise aufnehmende längliche Nut auszubilden. In diesem Fall wird das Messglied also in einer als Führungsbahn dienenden Längsnut geführt, was wegen der beidseitigen Führung eine besonders sichere Messung ermöglicht. Sich gegebenenfalls an der Führungsbahn angesammelte Verunreinigungen beeinträchtigen in diesem Fall wegen des praktisch nicht vorhandenen Spiels nicht die Messung. In jedem Fall kann an dem Messglied ein Ausräumelement angeordnet sein, das Verunreinigungen aus dem Weg schafft. Ein weiterer Vorteil einer Längsnut als Führungsbahn ist, dass sich damit ein Spiralverlauf realisieren lässt, der mehrere Umdrehungen umfasst. Es können also mehrere Umdrehungen des Stellelements durch den Sensor erfasst werden.

Vorteilhafterweise weist das Messglied die Form eines Stiftes auf. Insbesondere bei Ausbildung der Führungsbahn als Längsnut kann der Stift in geeigneter Weise in diese Nut eingreifen und während der Schwenkbewegung sicher daran abrutschen. Zur Verringerung von Reibwiderständen ist es alternativ denkbar, eine Rolle am Messglied anzuordnen, die auf der Führungsbahn abrollt.

Das bevorzugt vorgesehene drehbare Stellelement kann grundsätzlich auf unterschiedliche Weise an die Schwenkbewegung der Überladeeinrichtung gekoppelt sein. Eine konstruktiv günstige Möglichkeit besteht darin, dass das Stellelement ein Zahnritzel ist, das durch Eingriff mit einem an der Überladeeinrichtung befestigten Zahnrad angetrieben wird. Demnach handelt es sich bei dem Stellelement um ein gegenläufig zur Überladeeinrichtung drehendes Bauteil. Je nach Größenverhältnis zwischen Zahnrad und -ritzel ergibt sich ein Übersetzungsverhältnis, das abhängig vom realisierten Schwenkbereich der Überladeeinrichtung den Umdrehungsbereich des Stellelements festlegt. Zur genauen Positionserfassung sollte beim Eingriff zwischen Zahnrad und -ritzel ein möglichst geringes Spiel bestehen.

Wie bereits erwähnt, werden Überladeeinrichtungen bei Erntemaschinen beispielsweise mittels eines mit der Überladeeinrichtung drehfest verbundenen Drehkranzes angetrieben. In konstruktiver Hinsicht ist es besonders vorteilhaft, wenn dieser Drehkranz dem Zahnrad entspricht, welches das Stellelement antreibt. Es handelt sich demnach bei dem das Stellelement antreibenden Zahnrad vorzugsweise um den zum Antrieb der Überladeeinrichtung dienenden Drehkranz. Die gleichzeitige Nutzung des Drehkranzes zum Antrieb von Überladeeinrichtung und Stellrad verringert den benötigten Bauraum und die Anzahl verbauter Teile. Weiterhin lässt sich so die Vorrichtung einfach innerhalb des Maschinengehäuses anordnen.

Zur Veränderung des Abstands zwischen Stellelement und Zahnrad (Drehkranz) ist es vorteilhaft, das Stellelement und den Sensor an einer gemeinsamen Halteeinrichtung anzuordnen, die gegenüber dem Maschinengehäuse beweglich gelagert ist. Eine solche Beweglichkeit ermöglicht zum einen ein bei der Montage, Kalibrierung, Wartung oder Reparatur möglicherweise gewünschtes Abkoppeln der Vorrichtung von der Überladeeinrichtung. Zum anderen kann die Beweglichkeit dazu genutzt werden, das Spiel zwischen Stellelement und Zahnrad im Betrieb gering zu halten, wenn geeignete Andruckmittel vorgesehen sind.

Zur konstruktiv einfachen Realisierung kann die Halteeinrichtung beispielsweise schwenkbar gegenüber dem Maschinengehäuse gelagert sein. Die Schwenkachse der Halteeinrichtung ist dann zweckmäßigerweise von der Drehachse des Stellelements parallel beabstandet angeordnet. Zur Spielverringerung zwischen Stellelement und Zahnrad kann ergänzend eine am Maschinengehäuse angelenkte Haltefeder eine Rückstellkraft auf die Halteeinrichtung ausüben.

In einer zur bisher beschriebenen Ausführung alternativen Variante der Erntemaschine ist das Stellelement drehfest mit der Überladeeinrichtung verbunden. In diesem Fall entspricht die Drehbewegung des Stellelements also genau (d.h. in Richtung und Geschwindigkeit) der Schwenkbewegung der Überladeeinrichtung. Die Führungsbahn, mit der das Messglied in Reibkontakt steht, könnte dann beispielsweise am Drehkranz ausgebildet sein. Hierdurch ergibt sich eine Reduzierung der Anzahl benötigter Bauteile.

Bei dem in der Vorrichtung zum Einsatz kommenden Sensor kann es sich ganz allgemein um jedweden Weg- oder Winkelsensor handeln, der sich durch die verwendeten mechanischen Führungsmittel auslenken lässt. In vorteilhafter Ausführung handelt es sich bei dem Sensor um einen Absolutwertegeber, insbesondere ein Drehpotentiometer. Absolutwertgeber bieten den Vorteil, bei jeder Auslenkung einen definierten Spannungswert auszugeben. Daher muss - anders als beispielsweise bei einem Inkrementalgeber - nicht permanent die Sensorstellung abgespeichert werden, da der durch die Auslenkung definierte Spannungswert auch nach vorübergehendem Wegfall der Stromversorgung wieder erreicht wird. Daneben benötigen Absolutwertgeber nur einen Signalausgang, so dass angeschlossene Rechenmodule entlastet sind.

Zur mechanischen Kopplung des Sensors ist bei einer bevorzugten Ausführungsform das Messglied mittels eines Hebelarms am Sensor angelenkt. Eine solche Bauweise ist insbesondere bei Verwendung eines Drehpotentiometers zweckmäßig, um die Auslenkung des Messglieds in eine Drehbewegung umzulenken. Zur Verringerung von Messungenauigkeiten sowie zur Aufrechterhaltung des Kontakts zwischen Messglied und Führungsbahn ist es vorteilhaft, dass weiterhin eine an der Halteeinrichtung angelenkte Sensorfeder auf den Hebelarm einwirkt. Diese Sensorfeder ist bevorzugt so angeordnet, dass diese das Messglied gegen einen Kontaktbereich der Führungsbahn drückt.

Die Erfindung wird im Folgenden unter Hinweis auf die beigefügten Figuren anhand eines Ausführungsbeispiels noch einmal näher erläutert. Hieraus ergeben sich auch weitere Einzelheiten und Vorteile der Erfindung. Es zeigen:
- Fig. 1: eine schematische Seitenansicht eines Feldhäckslers mit einer verschwenkbaren Überladeeinrichtung, deren Position sich mit einer Vorrichtung erfassen lässt,
- Fig. 2: eine schematische Draufsicht auf die Vorrichtung,
- Fig. 3: eine perspektivische Ansicht eines bevorzugten Ausführungsbeispiels der Vorrichtung im eingebauten Zustand,
- Fig. 4: eine Detailansicht der Vorrichtung aus Fig. 3.

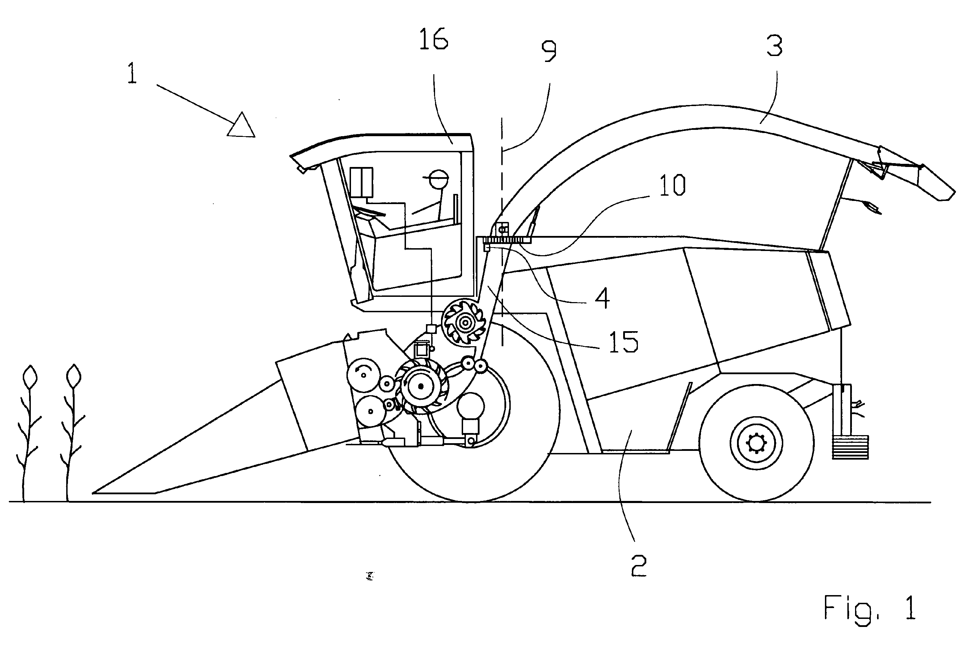

Fig. 1 zeigt in schematischer Seitenansicht einen Feldhäcksler 1. An dem Maschinengehäuse 2 des Feldhäckslers 1 ist eine Überladeeinrichtung 3 um eine Schwenkachse 9 verschwenkbar gelagert. Die Schwenkachse 9 ist im Ausführungsbeispiel in einem vertikalen Winkel ausgerichtet, jedoch sind auch beliebig anders geneigte Ausrichtungen denkbar. Die Überladeeinrichtung 3 dient dazu, einen Erntegutstrom, der den Feldhäcksler 1 durchläuft und durch dessen Turm 15 aufwärts gefördert wird, gezielt auf beispielsweise ein (nicht dargestelltes) Transportfahrzeug abzugeben. Aufgrund der Verschwenkbarkeit der Überladeeinrichtung 3 kann sich das Transportfahrzeug dabei seitlich neben (rechts oder links) oder hinter dem Feldhäcksler 1 befinden.

Die Überladeeinrichtung 3 kann auch während des Befüllens des Transportfahrzeugs verschwenkt werden, um eine gleichmäßige Befüllung zu erreichen. Durch genaues Anfahren unterschiedlicher Schwenkpositionen lassen sich dabei Erntegutverluste vermeiden. Zur Straßenfahrt wird die Überladeeinrichtung 3 nach hinten geschwenkt, um im Straßenverkehr möglichst wenig nach außerhalb des Feldhäckslers 1 abzuragen.

Um die Überladeeinrichtung 3 je nach Einsatzzweck zur Seite oder nach hinten um die Schwenkachse 9 zu schwenken, ist ein Zahnrad 10 drehfest mit der Überladeeinrichtung 3 verbunden, welches mittels eines (hier nicht dargestellten) Schneckentriebs motorisch angetrieben werden kann. Es lassen sich grundsätzlich beliebige Schwenkpositionen anfahren, jedoch ist im vorliegenden Fall der mögliche Schwenkbereich durch eine Fahrerkabine 16 eingeschränkt. Die Überladeeinrichtung 3 des gezeigten Feldhäckslers 1 kann zusätzlich in der Höhe, d.h. um eine horizontale Achse, geneigt werden. Dadurch lässt sich der Erntegutstrom noch genauer positionieren.

Der Feldhäcksler 1 verfügt erfindungsgemäß über eine Vorrichtung zur Positionserfassung der Überladeeinrichtung 3. In Fig. 1 ist ein Sensor 4 der Vorrichtung schematisch angedeutet. Die genaue Funktionsweise dieser Vorrichtung wird anhand der nachfolgenden Figuren beschrieben.

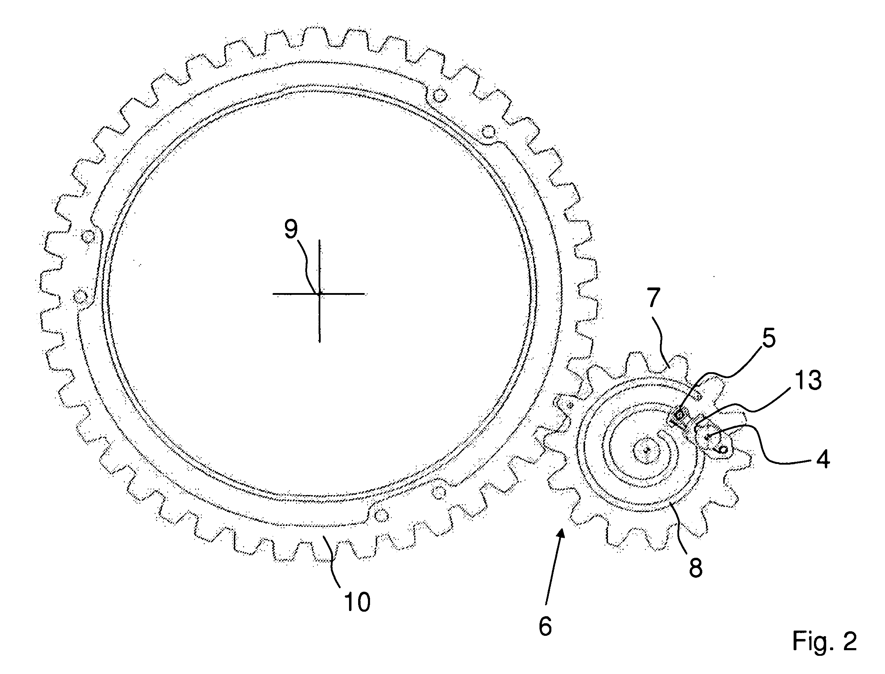

Fig. 2 ist eine schematische Draufsicht auf eine Vorrichtung. Zu sehen ist ein Zahnrad 10, das in ein als Stellelement 7 dienendes Zahnritzel eingreift. Bei dem Zahnrad 10 handelt es sich um einen mit der Überladeeinrichtung 3 drehfest verbundenen Drehkranz, der zum Antrieb der Überladeeinrichtung 3 dient. Das Zahnrad 10 wird beispielsweise von einem (nicht dargestellten) Schneckentrieb angetrieben, um die Überladeeinrichtung 3 zu verschwenken. An dem Stellelement 7 ist eine spiralförmig um dessen Drehachse umlaufende Führungsbahn 8 ausgebildet. Diese Führungsbahn 8 ist als in das Material des Stellelements 7 gefräste längliche Nut ausgeführt.

Ein Sensor 4 mit einem mechanisch auslenkbaren Messglied 5 ist ortsfest angeordnet. Es handelt sich bei dem Sensor 4 um ein Drehpotentiometer, wobei an dessen Messachse mittels eines Hebelarms 13 ein stiftförmiges Messglied 5 angelenkt ist. Das stiftförmige Messglied 5 greift in die spiralförmige Führungsbahn 8 des Stellelements 7 ein.

Die Vorrichtung funktioniert indem sich bei Schwenken der Überladeeinrichtung 3, und damit des verbundenen Zahnrads 10, das Stellelement 7 gegenläufig zum Zahnrad 10 dreht. Das Messglied 5 erfährt dann mit fortschreitender Drehung des Stellelements 7 in der spiralförmigen Führungsbahn 8 eine Auslenkung, die - abhängig von der Winkeländerung - durch die Steigung der Spirale definiert ist. Durch Drehung des Stellelements 7 verfährt das Messglied 5 in der Führungsbahn 8 ähnlich einer Schallplattennadel und lenkt so den Sensor 4 in definierter Weise aus. Der Sensor 4 liefert dementsprechend (bei geeigneter Bestromung) einen Spannungswert, der ein Maß für den Drehwinkel des Stellelements 7 ist. Bei bekanntem Übersetzungsverhältnis zwischen Zahnrad 10 und Zahnritzel (Stellelement 7) sowie erfolgter Kalibrierung kann aus dem Spannungswert des Sensors 4 damit die Schwenkposition der Überladeeinrichtung 3 ermittelt werden.

Bei der in Fig. 2 gezeigten Vorrichtung weist die spiralförmige Führungsbahn 8 zwei Umläufe auf. Je nach Beschaffenheit des Sensors 4 und/oder Übersetzungsverhältnis zwischen Zahnrad 10 und Zahnritzel (Stellelement 7) können mehr oder weniger Umläufe mit geeigneter Steigung notwendig sein, um den gesamten Schwenkbereich der Überladeeinrichtung zu erfassen.

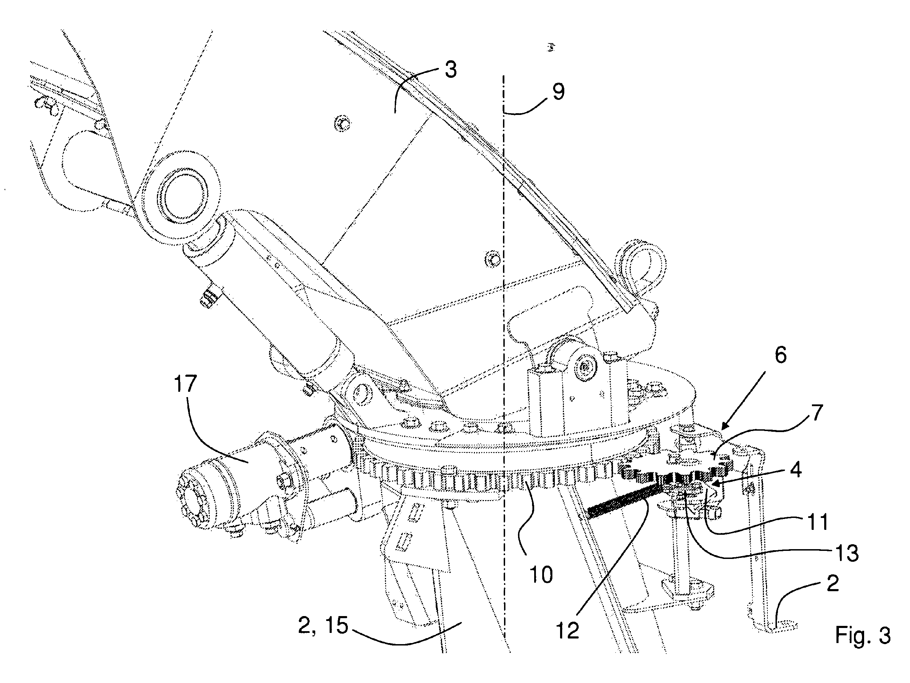

In Fig. 3 ist ein bevorzugtes Ausführungsbeispiel der Vorrichtung im Einbauzustand in einen Feldhäcksler in perspektivischer Ansicht dargestellt. Eine Überladeeinrichtung 3 ist um eine Schwenkachse 9 gegenüber einem dem Maschinengehäuse 2 zuordenbaren Turm 15 schwenkbar gelagert. An der Überladeeinrichtung 3, die zusätzlich um eine horizontale Achse in der Höhe verstellt werden kann, ist ein Zahnrad 10 drehfest befestigt. Ein Schneckenantrieb 17 greift in das Zahnrad 10 ein, um die Überladeeinrichtung 3 um die Schwenkachse 9 zu verschwenken.

Die eingebaute Vorrichtung in Fig. 3 erfasst die Schwenkposition der Überladeeinrichtung 3 auf prinzipiell gleiche Weise wie in Fig. 2. Die Vorrichtung umfasst ein als Zahnritzel ausgeführtes Stellelement 7, das in das Zahnrad 10 eingreift. Unterhalb des Stellelements 7 ist ein Sensor 4 angeordnet, dessen - in dieser Ansicht verdecktes - Messglied 5 von mechanischen Führungsmitteln 6 ausgelenkt wird. Der Sensor 4 und das Stellelement 7 sind an einer gemeinsamen plattenförmigen Halteeinrichtung 11 angeordnet.

Die Halteeinrichtung 11 ist gegenüber dem Maschinengehäuse 2 derart schwenkbar gelagert, dass sich durch Schwenken der Halteeinrichtung 11 der Abstand zwischen Stellelement 7 und Zahnrad 10 verändern lässt. Zum einen lässt sich das Stellelement 7 also aus dem Eingriff mit dem Zahnrad 10 auskoppeln, beispielsweise um den Einbau zu erleichtern, eine Kalibrierung vorzunehmen, zu reparieren oder dergleichen. Zum anderen lässt sich der Eingriffsabstand verändern, was insbesondere mittels einer am Turm 15 (oder Maschinengehäuse 2) angelenkten Haltefeder 12 erfolgt, die eine Rückstellkraft auf die Halteeinrichtung 11 ausübt, um trotz eventueller Passungenauigkeiten oder Abnutzung einen spielfreien Eingriff zwischen Stellelement 7 und Zahnrad 10 zu gewährleisten.

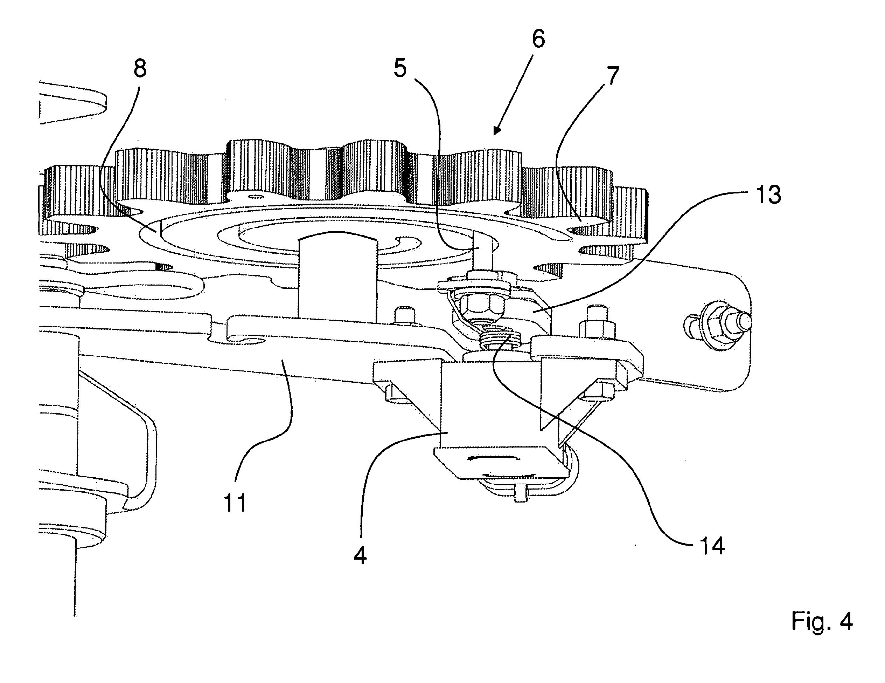

In Fig. 4 ist die Anordnung von Stellelement 7, Halteeinrichtung 11 und Sensor 4 in perspektivischer Ansicht von schräg unten im Detail zu sehen. Insbesondere ist zu erkennen, dass in das Stellelement 7 eine spiralförmige Führungsbahn 8 in Form einer länglichen Nut eingefräst ist. In dieser spiralförmigen Führungsbahn 8 rutscht bei Drehung des Stellelements 7 das stiftförmige Messglied 5 ab und lenkt über Hebelarm 13 den Sensor 4 aus. Es handelt sich bei dem Sensor 4 wieder um ein Drehpotentiometer. Zur Gewährleistung eines spielfreien Kontakts zwischen Messglied 5 und Führungsbahn 8 wirkt eine an der Halteeinrichtung 11 angelenkte Sensorfeder 14 auf den Hebelarm 13 ein und drückt so bei jeder Winkelstellung des Stellelements 7 das Messglied 5 an die Innenfläche der Führungsbahn 8. Daneben kann am Messglied 5 ein (nicht dargestellter) Ausräumer angeordnet sein, der gegebenenfalls auf der Führungsbahn 8 angesammelte Verunreinigungen von der Führungsbahn 8 schiebt. Bezüglich der grundsätzlichen Funktion der in den Fig. 3 und 4 gezeigten Vorrichtung sei zur Vermeidung von Wiederholungen auf die Erläuterungen zu Fig. 1 und 2 verwiesen.

### Bezugszeichenliste

- 1: Erntemaschine
- 2: Maschinengehäuse
- 3: Überladeeinrichtung
- 4: Sensor
- 5: Messglied
- 6: mechanische Führungsmittel
- 7: Stellelement
- 8: Führungsbahn
- 9: Schwenkachse
- 10: Zahnrad
- 11: Halteeinrichtung
- 12: Haltefeder
- 13: Hebelarm
- 14: Sensorfeder
- 15: Turm
- 16: Fahrerkabine
- 17: Schneckenantrieb

## Patentansprüche

1. Erntemaschine (1) mit einer Vorrichtung zur Positionserfassung einer gegenüber einem Maschinengehäuse (2) der Erntemaschine (1) um eine Schwenkachse (9) schwenkbaren Überladeeinrichtung (3), wobei ein Sensor (4) mit einem mechanisch auslenkbaren Messglied (5) am Maschinengehäuse (2) angeordnet ist, und wobei der Überladeeinrichtung (3) mechanische Führungsmittel (6) zugeordnet sind, die das Messglied (5) in Abhängigkeit vom Schwenkwinkel auslenken,
**dadurch gekennzeichnet, dass** die mechanischen Führungsmittel (6) das Messglied (5) in Bezug auf die Schwenkachse (9) in radialer Richtung auslenken.

2. Erntemaschine nach Anspruch 1, **dadurch gekennzeichnet, dass** die mechanischen Führungsmittel (6) ein drehbares Stellelement (7) umfassen, dessen Drehung an die Schwenkbewegung der Überladeeinrichtung (3) gekoppelt ist, wobei an dem Stellelement (7) eine umlaufende Führungsbahn (8) ausgebildet ist, mit der das Messglied (5) in Reibkontakt steht.

3. Erntemaschine nach Anspruch 2, **dadurch gekennzeichnet, dass** die Führungsbahn (8) in einem mit zunehmendem Drehwinkel des Stellelements (7) steigenden radialen Abstand zu dessen Drehachse verläuft, um eine winkelabhängige Auslenkung des Messglieds (5) vorzugeben.

4. Erntemaschine nach Anspruch 2 oder 3, **dadurch gekennzeichnet, dass** die Führungsbahn (8) einen bezogen auf die Drehachse des Stellelements (7) spiralförmigen Verlauf aufweist.

5. Erntemaschine nach einem der Ansprüche 2 bis 4, **dadurch gekennzeichnet, dass** die Führungsbahn (8) als eine das Messglied (5) zumindest teilweise aufnehmende längliche Nut ausgebildet ist.

6. Erntemaschine nach einem der Ansprüche 2 bis 5, **dadurch gekennzeichnet, dass** das Messglied (5) in Form eines Stiftes ausgeführt ist.

7. Erntemaschine nach einem der Ansprüche 2 bis 6, **dadurch gekennzeichnet, dass** das Stellelement (7) ein Zahnritzel ist, das durch Eingriff mit einem an der Überladeeinrichtung befestigten Zahnrad (10) angetrieben wird.

8. Erntemaschine nach Anspruch 7, **dadurch gekennzeichnet, dass** es sich bei dem Zahnrad (10) um einen zum Antrieb der Überladeeinrichtung dienenden Drehkranz handelt.

9. Erntemaschine nach Anspruch 7 oder 8, **dadurch gekennzeichnet, dass** das Stellelement (7) und der Sensor (4) an einer gemeinsamen Halteeinrichtung (11) angeordnet sind, die gegenüber dem Maschinengehäuse (2) beweglich, insbesondere schwenkbar, gelagert ist, so dass sich der Abstand zwischen Stellelement (7) und Zahnrad (10) verändern lässt.

10. Erntemaschine nach Anspruch 9, **dadurch gekennzeichnet, dass** eine am Maschinengehäuse (2) angelenkte Haltefeder (12) eine Rückstellkraft auf die Halteeinrichtung (11) ausübt, um einen spielfreien Eingriff zwischen Stellelement (7) und Zahnrad (10) zu gewährleisten.

11. Erntemaschine nach einem der Ansprüche 2 bis 6, **dadurch gekennzeichnet, dass** das Stellelement (7) drehfest mit der Überladeeinrichtung (3) verbunden ist.

12. Erntemaschine nach einem der Ansprüche 1 bis 11, **dadurch gekennzeichnet, dass** es sich bei dem Sensor (4) um einen Absolutwertgeber, insbesondere ein Drehpotentiometer handelt.

13. Erntemaschine nach einem der Ansprüche 1 bis 12, **dadurch gekennzeichnet, dass** das Messglied (5) mittels eines Hebelarms (13) am Sensor (4) angelenkt ist.

14. Erntemaschine nach Anspruch 13, **dadurch gekennzeichnet, dass** eine an der Halteeinrichtung (11) angelenkte Sensorfeder (14) auf den Hebelarm (13) einwirkt, um einen spielfreien Kontakt zwischen Messglied (5) und Führungsbahn (8) zu gewährleisten.

15. Erntemaschine nach einem der Ansprüche 1 bis 14, **dadurch gekennzeichnet, dass** es sich bei der dieser um einen Feldhäcksler (1) handelt.

## Claims

1. A harvesting machine (1) having an apparatus for position detection of a transloading device (3) pivotable about a pivot axis (9) relative to a machine housing (2) of the harvesting machine (1), wherein a sensor (4) having a mechanically deflectable measuring member (5) is arranged on the machine housing (2) and wherein associated with the transloading device (3) are mechanical guide means (6) which deflect the measuring member (5) in dependence on the pivot angle,
**characterised in that** the mechanical guide means (6) deflect the measuring member (5) in the radial direction with respect to the pivot axis (9).

2. A harvesting machine according to claim 1 **characterised in that** the mechanical guide means (6) include a rotatable actuating element (7), the rotation of which is coupled to the pivotal movement of the transloading device (3), wherein provided on the actuating element (7) is a peripheral guide track (8) with which the measuring member (5) is in frictional contact.

3. A harvesting machine according to claim 2 **characterised in that** the guide track (8) extends at a radial spacing, that increases with the increasing rotational angle of the actuating element (7), relative to the axis of rotation thereof, to predetermine an angle-dependent deflection of the measuring member (5).

4. A harvesting machine according to claim 2 or claim 3 **characterised in that** the guide track (8) is of a configuration which is spiral with respect to the axis of rotation of the actuating element (7).

5. A harvesting machine according to one of claims 2 to 4 **characterised in that** the guide track (8) is in the form of an elongate groove at least partially accommodating the measuring member (5).

6. A harvesting machine according to one of claims 2 to 5 **characterised in that** the measuring member (5) is in the form of a pin.

7. A harvesting machine according to one of claims 2 to 6 **characterised in that** the actuating element (7) is a toothed pinion which is driven by engagement with a gear (10) fixed to the transloading device.

8. A harvesting machine according to claim 7 **characterised in that** the gear (10) is a ring gear serving for driving the transloading device.

9. A harvesting machine according to claim 7 or claim 8 **characterised in that** the actuating element (7) and the sensor (4) are arranged on a common holding device (11) which is mounted movably, in particular pivotably, with respect to the machine housing (2), so that the spacing between the actuating element (7) and the gear (10) can be altered.

10. A harvesting machine according to claim 9 **characterised in that** a holding spring (12) pivotably mounted to the machine housing (2) exerts a return force on the holding device (11) to ensure play-free engagement between the actuating element (7) and the gear (10).

11. A harvesting machine according to one of claims 2 to 6 **characterised in that** the actuating element (7) is non-rotatably connected to the transloading device (3).

12. A harvesting machine according to one of claims 1 to 11 **characterised in that** the sensor (4) is an absolute value sensor, in particular a rotary potentiometer.

13. A harvesting machine according to one of claims 1 to 12 **characterised in that** the measuring member (5) is pivotably mounted to the sensor (4) by means of a lever arm (13).

14. A harvesting machine according to claim 13 **characterised in that** the sensor spring (14) pivotably mounted to the holding device (11) acts on the lever arm (13) to ensure play-free contact between the measuring member (5) and the guide track (8).

15. A harvesting machine according to one of claims 1 to 14 **characterised in that** it involves a forage harvester (1).

## Revendications

1. Machine de récolte (1) avec un dispositif pour détecter la position d'un dispositif de transbordement (3) apte à pivoter autour d'un axe de pivotement (9) par rapport à un carter de machine (2) d'une machine de récolte (1), un capteur (4) doté d'un organe de mesure (5) apte à être dévié mécaniquement étant disposé sur le carter de machine (2), et des moyens de guidage mécaniques (6) étant associés au dispositif de transbordement (3), lesquels dévient l'organe de mesure (5) en fonction de l'angle de pivotement, **caractérisée en ce que** les moyens de guidage mécaniques (6) dévient l'organe de mesure (5) en direction radiale par rapport à l'axe de pivotement (9).

2. Machine de récolte selon la revendication 1, **caractérisée en ce que** les moyens de guidage mécaniques (6) comprennent un élément de réglage rotatif (7) dont la rotation est couplée au mouvement de pivotement du dispositif de transbordement (3), un chemin de guidage tournant (8), avec lequel l'organe de mesure (5) est en contact frottant, étant formé sur élément de réglage (7).

3. Machine de récolte selon la revendication 2, **caractérisée en ce que** le chemin de guidage (8) s'étend, par rapport à l'axe de rotation de l'élément de réglage (7), à une distance radiale qui croît lorsque l'angle de rotation de celui-ci augmente, afin de prescrire une déviation de l'organe de mesure (5) dépendante de l'angle.

4. Machine de récolte selon la revendication 2 ou 3, **caractérisée en ce que** le chemin de guidage (8) présente une forme spiralée par rapport à l'axe de rotation de l'élément de réglage (7).

5. Machine de récolte selon une des revendications 2 à 4, **caractérisée en ce que** le chemin de guidage (8) est réalisé sous la forme d'une rainure allongée recevant l'organe de mesure (5) au moins partiellement.

6. Machine de récolte selon une des revendications 2 à 5, **caractérisée en ce que** l'organe de mesure (5) est réalisé sous la forme d'une broche.

7. Machine de récolte selon une des revendications 2 à 6, **caractérisée en ce que** l'élément de réglage (7) est un pignon qui est entraîné par engrènement avec une roue dentée (10) fixée au dispositif de transbordement.

8. Machine de récolte selon la revendication 7, **caractérisée en ce que** la roue dentée (10) est une couronne tournante servant à entraîner le dispositif de transbordement.

9. Machine de récolte selon la revendication 7 ou 8, **caractérisée en ce que** l'élément de réglage (7) et le capteur (4) sont disposés sur un dispositif de support (11) commun qui est monté mobile, en particulier pivotant, par rapport au carter de machine (2), de sorte que la distance entre élément de réglage (7) et roue dentée (10) peut être modifiée.

10. Machine de récolte selon la revendication 9, **caractérisée en ce qu'**un ressort de retenue (12) articulé sur le carter de machine (2) exerce une force de rappel sur le dispositif de support (11) pour garantir un engrènement sans jeu entre élément de réglage (7) et roue dentée (10).

11. Machine de récolte selon une des revendications 2 à 6, **caractérisée en ce que** l'élément de réglage (7) est relié au dispositif de transbordement (3) de manière solidaire en rotation.

12. Machine de récolte selon une des revendications 1 à 11, **caractérisée en ce que** le capteur (4) est un transmetteur de valeur absolue, en particulier un potentiomètre rotatif.

13. Machine de récolte selon une des revendications 1 à 12, **caractérisée en ce que** l'organe de mesure (5) est articulé sur le capteur (4) au moyen d'un bras de levier (13).

14. Machine de récolte selon la revendication 13, **caractérisée en ce qu'**un ressort de capteur (14) articulé sur le dispositif de support (11) agit sur le bras de levier (13) pour garantir un contact sans jeu entre organe de mesure (5) et chemin de guidage (8).

15. Machine de récolte selon une des revendications 1 à 14, **caractérisée en ce que** celle-ci est une ensileuse (1).
